(19) Europäisches Patentamt
European Patent Office
Office européen des brevets

(11) **EP 1 658 191 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **04786169.5**

(22) Anmeldetag: **24.08.2004**

(51) Int Cl.:
**B60K 35/00** *(2006.01)* **G06F 3/00** *(2006.01)*

(86) Internationale Anmeldenummer:
**PCT/DE2004/001870**

(87) Internationale Veröffentlichungsnummer:
**WO 2005/021314 (10.03.2005 Gazette 2005/10)**

(54) **VERFAHREN ZUR ANZEIGESTEUERUNG VON UNTERSCHIEDLICHEN INFORMATIONEN IN EINEM FAHRZEUG UND OPTOAKUSTISCHE INFORMATIONSEINHEIT**

METHOD FOR CONTROLLING THE DISPLAY OF DIFFERENT INFORMATION IN A VEHICLE AND OPTOACOUSTIC INFORMATION UNIT

PROCEDE POUR COMMANDER L'AFFICHAGE D'INFORMATIONS DIFFERENTES DANS UN VEHICULE ET UNITE D'INFORMATION OPTOACOUSTIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.08.2003 DE 10339314**

(43) Veröffentlichungstag der Anmeldung:
**24.05.2006 Patentblatt 2006/21**

(73) Patentinhaber: **Fraunhofer-Gesellschaft zur Förderung der angewandten Forschung e.V. 80686 München (DE)**

(72) Erfinder:
• **DUCKSTEIN, Bernd 14199 Berlin (DE)**
• **PRZEWOZNY, David 12489 Berlin (DE)**
• **PASTOOR, Siegmund 10823 Berlin (DE)**
• **RÖDER, Hans 14057 Berlin (DE)**
• **SCHENKE, Klaus 10555 Berlin (DE)**

(56) Entgegenhaltungen:
WO-A1-20/04016460      DE-A- 10 121 392
DE-A- 19 951 001       DE-C- 19 953 835
US-A- 5 926 251        US-A1- 2003 007 227

• **PATENT ABSTRACTS OF JAPAN Bd. 2003, Nr. 12, 5. Dezember 2003 (2003-12-05) -& JP 2003 240560 A (ALPINE ELECTRONICS INC), 27. August 2003 (2003-08-27)**
• **PATENT ABSTRACTS OF JAPAN Bd. 1995, Nr. 07, 31. August 1995 (1995-08-31) -& JP 07 103784 A (HONDA MOTOR CO LTD), 18. April 1995 (1995-04-18)**

## Beschreibung

Die Erfindung bezieht sich auf ein Verfahren zur Anzeigesteuerung von unterschiedlichen Informationen auf einem gemeinsamen Dual-View-Display durch den Fahrer während der Fahrt in einem Fahrzeug, wobei auch ein möglicher Beifahrer das Dual-View-Display betrachten kann, und auf eine optoakustische Informationseinheit in einem Fahrzeug zur Anzeige unterschiedlicher Informationen auf einem Dual-View-Display mit einer Programmeinheit und einer Anzeigesteuereinheit.

Derartige optoakustische Informationseinheiten werden beispielsweise für eine Darstellung von Fahrzeugführungs- und Zustandsinformationen (Navigationsdisplay zur Darstellung fahrtrelevanter Daten, wie Straßenkarte, Verkehrsinformationen, und Zielführungsinformationen, Betriebsdaten über das Fahrzeug, wie Geschwindigkeit und Motortemperatur) sowie zur Darstellung von Fernsehbildern (Mediendisplay zur Darstellung fahrtunrelevanter Daten, beispielsweise Videofilme, TV-Übertragungen, Internetseiten) in modernen Autos eingesetzt und sind aus der Praxis in verschiedenen Ausführungsformen bekannt. Dabei werden auch unterschiedliche Verfahren zur Steuerung der Anzeige auf dem Display als wesentlicher Teil der optoakustischen Informationseinheit angewendet, die sich hauptsächlich in ihrem Komfort für den Fahrer als Hauptanwender unterscheiden. Wenn auch im Folgenden oft von der Anwendung im Auto oder allgemeiner im Verkehrsgeschehen auf dem Lande ausgegangen wird, beziehen sich die Ausführungen auch genauso auf Fahrzeuge für das Verkehrsgeschehen auf und in dem Wasser und in der Luft. Überall dort, wo mit einem Fahrzeug ein Weg gefunden und über das Fahrzeug Informationen eingeholt sowie Passagiere transportiert werden müssen, sind derartige Informationseinheiten zur Komfortsteigerung des Fahrers und seiner Beifahrer einsetzbar. Am häufigsten werden derzeit jedoch noch separate Displays für die Navigationsanzeige und die Medienwiedergabe verwendet. Die Mediendisplays für die Passagiere im Fond werden beispielsweise in die Kopfstützen der Vordersitze eingebaut, aus dem Wagendach herunter geklappt oder mit Hilfe eines flexiblen Tragarmes als Satellit ausgeführt. Für den Beifahrer wird das Display entweder ausklappbar im Bereich der Sonnenblende oder ausfahrbar in die Instrumentenkonsole eingebaut, wobei das Risiko besteht, dass das freie Sichtfeld des Fahrers eingeschränkt wird und der Fahrer ungewollt durch die Medienwiedergabe abgelenkt wird. Das Navigationsdisplay wird üblicherweise in die Mittelkonsole eingebaut oder unterhalb des Rückspiegels auf die Instrumentenkonsole gesetzt (diese Lösung wird oft bei nachrüstbaren Systemen angeboten).

Ein gänzlich anderer Ausführungsweg besteht darin, ein gemeinsames Display für die zeitlich alternative (selektive) Navigations- und Medienanzeige zu verwenden (Dual-View-Display, zu unterscheiden von der Bezeichnung "Dual-View" für Multimediapräsentationen im Split-Screen- oder Picture-in-Picture-Modus), welches durch zusätzliche optische und/oder elektrische Komponenten eine selektive Wiedergabe der beiden Informationsquellen in Richtung auf den Fahrer bzw. den Beifahrer gestattet. Dabei handelt es sich in der einfachsten Form um einen manuellen Umschalter in einem Adapterkabel, mit dem zwischen den unterschiedlichen Informationen hin- und hergeschaltet werden kann. Als Variante sind auch bereits Informationseinheiten bekannt, die fahrtunrelevante Daten ausschließlich im Stillstand des Fahrzeugs anzeigen und während der Fahrt nur den gegebenenfalls vorhandenen Ton weiterlaufen lassen, was entsprechend unkomfortabel für den Beifahrer ist. Aus der DE 197 37 942 A1 ist eine fest im Armaturenbrett eines Kraftfahrzeugs eingebaute Informationseinheit bekannt, bei der das Dual-View-Display ein Flüssigkristallelement aufweist, das in einer ersten Schaltstellung in einem großen Winkelbereich lichtdurchlässig und in einer zweiten Schaltstellung außerhalb eines kleinen Winkelbereichs lichtundurchlässig ist. Dabei ist der große Winkelbereich auf Fahrer und Beifahrer, der kleine Winkelbereich aber nur auf den Beifahrer ausgerichtet. In dem kleinen Winkelbereich ist das dargestellte Bild ständig sichtbar, wohingegen der große Winkelbereich in ausgeschalteter Stellung dunkel ist. Es ist immer nur ein Bildinhalt darstellbar, eine Umschaltung zwischen verschiedenen Bildinhalten muss daher manuell erfolgen. Um eine besonders hohe Differenz zwischen den Lichtdurchlässigkeiten in Fahrer- und Beifahrerblickrichtung zu erhalten, kann die Ansteuerspannung des Flüssigkristallelements in Abhängigkeit von der Temperatur geregelt werden. Dazu können innerhalb und außerhalb des kleinen Winkelbereichs Fotosensoren angeordnet sein, die die durchgelassene Lichtmenge detektieren und über eine Veränderung der Ansteuerspannung optimieren. Durch den kleinen Winkelbereich wird der Beifahrer, will er während der Fahrt einen Film betrachten, gezwungen, seinen Kopf stark zu. fixieren, was insbesondere durch die auftretenden Fahrbewegungen schnell zur Ermüdung führt. Über das Verfahren zur Anzeigesteuerung, also zum Umschalten zwischen den beiden Einblickbereichen wird in der Offenlegungsschrift keine Angabe gemacht, es ist aber davon auszugehen, dass es sich hierbei um eine manuell zu betätigende elektronische Umstellung handelt, die vom Fahrer und auch vom Beifahrer ausgeführt werden kann. Es muss also insbesondere der Fahrer zur möglichen Betrachtung der für ihn fahrtrelevanten Daten eine aktive Handlung ausführen, die entsprechende Bewegungen und auch Zeit benötigt. Vergleichbar ist dieser Vorgang mit dem manuellen Einschalten eines Verkehrssenders im Radio. Eine Ablenkung des Fahrers vom Fahrgeschehen und eine relativ große (in einer aktuellen Entscheidungssituation gegebenenfalls zu große) Zeitspanne vom Wunsch oder der Erfordernis der Datenbetrachtung bis zu deren Darstellung treten somit auf. Des weiteren muss auch ständig die Umschaltung der verschiedenen Bildinhalte erfolgen.

Aus der DE 199 20 789 A1 ist eine umschaltfreie Informationseinheit bekannt, deren Display mit einem Zylinderlinsenraster arbeitet, das die gleichzeitige Betrachtung von zwei verschiedenen Bildinhalten aus unterschiedlichen Blickrichtungen ermöglicht. Im Prinzip kommen für diese richtungsselektive Wiedergabe ähnliche Methoden in Betracht, wie sie auch für die selektive Wiedergabe eines linken und eines rechten Stereobildes in Rasterstreifenform bei autostereoskopischen 3D-Displays angewendet werden und allgemein bekannt sind, sodass es sich bei der zeitgleichen dualen Betrachtung im Auto um eine neue Anwendung handelt. Der Unterschied zur 3D-Wiedergabe besteht jedoch darin, dass der laterale Abstand zwischen den beiden Betrachtungszonen sehr groß ist (ca. 70 cm; bei der Stereowiedergabe entspricht der laterale Abstand dem Augenabstand von ca. 65 mm), was entsprechende Anforderungen an die Rasterung stellt. Diese Ausführungsform hat den generellen Nachteil, dass die örtliche Bildauflösung reduziert wird, weil nur noch die Hälfte der Bildpunkte des Displays für die Navigationsanzeige bzw. für die Medienwiedergabe zur Verfügung steht. Bei der theoretisch möglichen zeitsequenziellen richtungsselektiven Wiedergabe müsste die Bildwiederholrate für beide Bildinhalte halbiert werden. Dazu würden spezielle Displays mit einer sehr hohen Bildwiederholrate (mehr als 120 Hz) für die flimmerfreie Wiedergabe der beiden Bilder (mehr als 60 Hz) benötigt werden. Mit heutigen Flachbildschirmen (LCD-Monitore, Plasmabildschirme, Elektrolumineszenz-Displays) kann diese Anforderung jedoch nicht erfüllt werden.

In der DE 199 51 001 A1 wird eine Vorrichtung offenbart, bei der die Blickrichtung des Fahrers genutzt wird, um Informationen aus verschiedenen Datenquellen in das Blickfeld einzublenden. Zweck dieser Vorrichtung ist es, den Fahrer von der Aufgabe zu entbinden, seinen Blick auf ein Anzeigegerät zu lenken, um Informationen abzulesen. Die Informationen werden entweder in das hauptsächliche Blickfeld des Fahrers eingeblendet (Head-up Display; in diesem Fall wird die Windschutzscheibe für die Einspiegelung verwendet) oder direkt auf die Netzhaut abgebildet. Durch Spracheingabe oder Veränderungen der Blickrichtung soll der Fahrer auch in die Lage versetzt werden, die auf diese Weise in seinem Blickfeld dargestellten Geräte und Funktionen zu aktivieren. Wenn der Blick zu lange von der Straße abgewendet wird, erfolgt eine Warnung. Es kann auch ein autostereoskopischer Bildschirm vorgesehen sein, bei dem ein Linsenraster der Kopfstellung des Betrachters nachgeführt wird, sodass die gerasterten Bildinhalte augenrichtig zugeordnet werden. Diese Möglichkeit der optischen Darstellung ist jedoch in Kombination mit einem Head-up Display oder einem Netzhautprojektor zu sehen, so dass auch andere Insassen des Fahrzeugs oder andere Informationen auf diesem autostereoskopischen Bildschirm dargestellt werden können. Dieser ist jedoch in seiner Anordnung an die Hauptblickrichtung der Fahrers angepasst, sodass weitere Insassen keinen guten Einblick haben, zumal bei der an den Fahrer angepassten autostereoskopischen Bilddarstellung. In keinem Fall jedoch handelt es sich bei der bekannten Vorrichtung um eine solche zur zeitgleichen oder zeitversetzten Anzeige von zwei unterschiedlichen Bildinhalten nach dem Dual-View-Prinzip.

Aus der DE 197 46 764 A1 ist eine ebenfalls auf dem Zylinderlinsenrasterprinzip aufbauende, aber umschaltbare Informationseinheit bekannt, bei der ein gerasterter Bildinhalt aus zwei verschiedenen Blickrichtungen betrachtet werden kann. Dies erfolgt durch die Verschiebung eines vorgespannten Exzenterhebels, über den die Zylinderlinsenrasterplatte zur Lichtablenkung in unterschiedliche Richtungen seitlich verschiebbar ist. Durch die Darstellung jeweils nur eines Bildinhaltes vermindert sich zwar das Auflösungsproblem, problematisch bleibt jedoch die manuelle Umschaltbarkeit, die die bereits weiter oben erwähnten Komfort- und Zeiteinbußen mit sich bringt. Zudem bedingt das Verschieben oder Verschwenken der Zylinderrasterplatte nur eine Änderung des möglichen Einblickwinkels, eine Umschaltung der Bildinhalte muss zusätzlich erfolgen. Zusammenfassend gesehen sind somit aus dem Stand der Technik nur Verfahren und sie umsetzende Systeme bekannt, bei dem der Einblickwinkel und unabhängig davon die dargestellte Information von Hand durch den bewusst umzusetzenden Wunsch zumindest des Fahrers eingestellt werden kann. Dadurch wird in erhöhtem Maße die Aufmerksamkeit des Fahrers verlangt und vom Verkehrsgeschehen abgezogen sowie der Komfort erheblich eingeschränkt.

Die US 2003/0007227 A1**,** von der die vorliegende Erfindung als nächstliegendem Stand der Technik ausgeht, offenbart ein Verfahren zur Anzeigesteuerung von unterschiedlichen Informationen auf einem gemeinsamen Dual-View-Display durch den Fahrer während der Fahrt in einem Fahrzeug, wobei auch ein möglicher Beifahrer das Dual-View-Display betrachten kann. Dabei wird ein Flüssigkristall-Display mit einer angesteuerten Flüssigkristall-Shuttereinrichtung zur Kontrolle des Blickwinkels verwendet. Wenn das Fahrzeug steht, ist die Shuttereinrichtung ausgeschaltet und der Fahrer hat Einblick in das Display zur Betrachtung eines DVD-Films. Während der Fahrt wird die Shuttereinrichtung so gesteuert, dass der Fahrer eine Darstellung der Navigationseinrichtung auf dem Display zwar sehen kann, aber keinen Einblick in die Darstellung des DVD-Films erhält. Shuttereinrichtungen führen aber immer zu einer Komfortminderung für die Betrachter und sind sehr aufwändig.

Die nachveröffentlichte WO 2004/016460 A1 zeigt eine optoakustische Informationseinheit bei der gleichzeitig unterschiedliche Informationen für den Fahrer und Beifahrer bereitgestellt werden können, also nicht nur ein dunkler Bildschirm für einen der beiden und Information für den anderen.

WO 2004/016460 A1 offenbart eine optoakustische Informationseinheit für ein Fahrzeug zur Anzeige unterschiedlicher Informationen auf einem gemeinsamen Dual-View-Display mit einer Programmeinheit und einer Anzeigesteuereinheit zur Anzeigesteuerung von unterschiedlichen Informationen auf dem fest in das Fahrzeug integrierbaren Dual-View-Display durch den Fahrer während der Fahrt in einem Fahrzeug, wobei auch ein möglicher Beifahrer das Dual-View-Display betrachten kann, wobei eine videobasierte Detektionseinheit zur fortlaufenden, automatischen Ermittlung der aktuellen Blickrichtung des Fahrers mit zumindest einer in unmittelbarer Nähe des Dual-View-Displays angeordneten Videokamera und eine auf die Anzeigesteuereinheit führende Auswerteeinheit vorgesehen sind, wobei es möglich ist, dass abhängig von der Blickrichtung des Fahrers Informationen nur für den Beifahrer sichtbar gemacht werden können wobei das Dual-View-Display so ausgebildet ist, dass dem Fahrer und dem Beifahrer gleichzeitig unterschiedliche, sich jeweils vom Informationsgehalt eines ausgeschalteten Bildschirms unterscheidende, Informationen bereitgestellt werden.

Die Aufgabe für die Erfindung ist daher darin zu sehen, ein Verfahren zur Anzeigesteuerung von unterschiedlichen Informationen auf einem gemeinsamen Dual-View-Display anzugeben, das für den Fahrer bei der Betrachtung fahrtrelevanter Informationen den größtmöglichen Komfort bietet. Dabei soll der Fahrer nicht durch die ungewollte Betrachtung der Medienwiedergabe von seiner Aufgabe als Fahrzeugführer abgelenkt werden und somit eine hohe Fahrsicherheit gewährleistet werden. Weiterhin soll aber auch ein möglicher Beifahrer in seinem Komfort bei der Betrachtung fahrtunrelevanter Daten nicht unnötig und komfortmindernd belastet werden. Das Verfahren soll schnell und störungsunempfindlich in seinem Ablauf sein. Ebenso soll eine optoakustische Informationseinheit zur Umsetzung insbesondere des erfindungsgemäßen Verfahrens einfach und robust in ihrem Aufbau und in ihrer Handhabung sein. Darüber hinaus soll sie, insbesondere das verwendete Display, kostengünstig und zugänglich für aktuelle Mediendarstellungen sein. Die **Lösungen** für diesen Aufgabenkomplex sind den beiden nebengeordneten Hauptansprüchen zu entnehmen. Vorteilhafte Weiterbildungen werden in jeweiligen Unteransprüchen aufgezeigt und im Folgenden im Zusammenhang mit der Erfindung näher erläutert.

Bei dem erfindungsgemäßen Verfahren im Dual-View-Betrieb wird automatisch die aktuelle Blickrichtung des Fahrers fortlaufend detektiert. Wird festgestellt, dass der Fahrer das Dual-View-Display anblickt, werden sofort die für den Fahrer fahrtrelevanten Informationen angezeigt. Dadurch hat der Fahrer stets die benötigten Informationen zur Verfügung, ohne dass er Handlungen durchführen muss. Er wird vom System beobachtet und kann seine Entscheidung, fahrrelevante Informationen erhalten zu wollen, intuitiv durch die Wahl seiner Blickrichtung anzeigen. Untersuchungen zur Fahrsicherheit haben gezeigt, dass dem Fahrer maximal eine Sekunde Zeit für das Ablesen der Instrumente zur Verfügung steht; wenn die Aufmerksamkeit länger als eine Sekunde auf die Anzeigen gerichtet ist, steigt das Unfallrisiko signifikant. Die Unterbrechung der Medienpräsentation für den Beifahrer wird sich also im Anwendungsfall in engen zeitlichen Grenzen halten, sodass das erfindungsgemäße Verfahren einen hohen Betrachtungskomfort für den Beifahrer garantiert. Dadurch, dass jedes Mal, wenn der Fahrer das Dual-View-Display anblickt, die fahrtrelevanten Daten angezeigt werden, erfolgt auch ein Erziehungsprozess. Der Fahrer kann fahrtunrelevante Daten, die einem Beifahrer in den Phasen des abgewendeten Blicks angeboten werden, nicht betrachten. Sie verschwinden automatisch, wenn der Fahrer das Dual-View-Display anschaut. Der Fahrer wird also durch eine Medienabspielung visuell nicht abgelenkt und die Fahrsicherheit ist gewährleistet. Untersuchungen mit Navigationssystemen haben auch eine systematische Abhängigkeit der Blickfrequenz von der Komplexität der aktuellen Navigation aufgezeigt. Im Normalfall bedeutet die Unterbrechung der Medienpräsentation beim Blick des Fahrers auf das Dual-View-Display (kurzzeitige Umschaltung in den Navigationsmodus) keine große Beeinträchtigung für den Beifahrer; auch übliche Filmpräsentationen im Fernsehen werden durch sehr viel länger andauernde Werbeblöcke unterbrochen. Bei einer häufigeren Unterbrechung wird der Beifahrer ohnehin auf seine Medienpräsentation verzichten und das Verkehrsgeschehen beobachten.

Die nahezu verzögerungsfreie Darstellung fahrtrelevanter Daten beim Blickkontakt des Fahrers mit dem Dual-View-Display kann durch eine entsprechende Detektionstechnik erreicht werden. Der Fahrer wird für ihn störungsfrei von eine Videokamera beobachtet. Die Auswertung der detektierten Bilder erfolgt dann binär als Ja- oder Nein-Entscheidung, da vom System lediglich zu entscheiden ist, ob der Fahrer das Gebiet des Displays anblickt oder nicht. Dadurch kann eine Datenverarbeitung in Echtzeit erreicht werden. Eine geringe Verzögerung ergibt sich dann lediglich durch den Steuerbefehl zum Umschalten des Bildinhaltes. Bei dem erfindungsgemäßen Verfahren werden also beide Informationsquellen alternativ unter Nutzung der vollen Bildauflösung des Displays angezeigt, die Umschaltung zwischen beiden Informationsquellen erfolgt automatisch in Abhängigkeit von der aktuellen Blickrichtung des Fahrers. Aufgrund der selektiven, nicht-zeitgleichen Darstellung der unterschiedlichen Bildinhalte für Fahrer und Beifahrer kann die volle örtliche Auflösung des Displays in üblicher Ausrichtung des Displays (Querformat) genutzt werden. Das erfindungsgemäße Verfahren ist somit technisch einfach mit handelsüblichen Bauteilen zu realisieren und zeigt gegenüber den bekannten Ansätzen für ein Dual-View-Display zusammenfassen folgende Vorzüge:

- Es können handelsübliche Flachbildschirme verwendet werden.
- Das Dual-View-Display kann im üblichen Breitbildformat (4:3, 16:9, ...) verwendet werden. Das ist besonders vorteilhaft, wenn für den Beifahrer TV-Programme oder Spielfilme von DVD dargestellt werden sollen (aufgrund der vertikalen Ausrichtung der Farbfilterstreifen ist für die bekannte Lösung mit einem Trennraster bei heutigen handelsüblichen Flachbildschirmen ein Betrieb im unvorteilhaften Hochformat notwendig).
- Es ist keine besondere Bildsignalaufbereitung, wie beispielsweise spalten- oder zeilenweises Verkämmen der Bilder für Fahrer und Beifahrer, erforderlich.

- Es gibt keinen Verlust an Bildauflösung und Helligkeit: Fahrer und Beifahrer sehen die volle Auflösung und Lichtstärke des Displays, beispielsweise 1024 x 786 Punkte.
- Es gibt keine so gravierenden Realisierungsbarrieren wie in den stereobasierten Ansätzen aufgrund der dort zu realisierenden extremen Distanz zwischen den Betrachtungszonen.
- Es wird durch den automatischen Verfahrensablauf ein optimaler Komfort für den Fahrer bei gleichzeitiger Gewährleistung der Fahrsicherheit geboten.

In der Realisierung des erfindungsgemäßen Verfahrens ist vorgesehen, dass die optoakustische Informationseinheit neben dem Dual-View-Display, einer Programmeinheit für die darzustellenden Informationen und einer Anzeigesteuereinheit zur Ausführung der aus der Datenverarbeitung resultierenden Anforderungen auch eine videobasierte Detektionseinheit zur fortlaufenden, automatischen Ermittlung der aktuellen Blickrichtung des Fahrers aufweist, die zumindest eine in unmittelbarer Nähe des Displays angeordnete Videokamera, die auf den Fahrer ausgerichtet ist, und eine auf die Anzeigesteuereinheit führende Auswerteeinheit umfasst. Somit handelt es sich um ein einfaches und kostengünstiges System, das auch für eine Nachrüstung geeignet ist. Dabei ist das Dual-View-Display in die Mittelkonsole eines Fahrzeugs integriert. Die Videokamera kann direkt oberhalb des Displays in einer Blende angeordnet sein. Möglich ist auch eine Integration direkt in den Displayrand oder - bei transparenten Displays - eine Positionierung hinter den Bildschirm.

Durch den automatischen Umschaltmodus im erfindungsgemäßen Verfahren hat der Fahrer keine Gelegenheit, ablenkende Bildinhalte direkt zu betrachten. Es besteht allerdings unter Umständen das Risiko, dass der Fahrer die Medienpräsentation im peripheren Blickfeld verfolgt und von der Beobachtung des Verkehrsgeschehens abgelenkt wird. Dies kann verhindert werden, wenn die Informationen richtungsselektiv angezeigt werden, wobei die fahrtrelevanten Informationen nur dem Fahrer und die fahrtunrelevanten Informationen nur dem Beifahrer angezeigt werden. Eine solche richtungsselektive Beleuchtung für ein Dual-View-Display ist beispielsweise aus der DE 197 35 177 A1 bekannt. Für die Realisierung kann ein Rückbeleuchtungssystem mit zwei alternativen Beleuchtungsrichtungen, von denen die eine zum Fahrer und die andere zum Beifahrer verläuft, integriert sein. Zur Realisierung kann beispielsweise ein handelsübliches Transmissionspaneel (LCD-Display) mit modifizierter Rückbeleuchtung verwendet werden. Die technische Lösung für die richtungsselektive Rückbeleuchtung besteht vorzugsweise in zwei auf den Fahrer bzw. Beifahrer ausgerichteten weißen LED-Arrays. LEDs ermöglichen eine nahezu verzögerungsfreie Aktivierung/Deaktivierung der Beleuchtung, sind zudem langlebig und weisen einen hohen Wirkungsgrad auf. Bei einer Aktivierung der fahrtrelevanten Daten wird gleichzeitig die auf den Fahrer ausgerichtete Beleuchtungseinrichtung aktiviert. In den Phasen der Mediendarstellung hingegen wird die auf den Beifahrer ausgerichtete Beleuchtungseinrichtung aktiviert. Dabei klammert diese auf jeden Fall den Fahrer aus. Die auf diesen ausgerichtete Beleuchtungseinrichtung kann jedoch auch den Beifahrer erfassen, sodass dieser auch die fahrtrelevanten Informationen betrachten kann.

Mittels einer vorgesehenen manuellen Bedieneinrichtung, beispielsweise ein einfacher Umschalter, zum wahlweisen Aktivieren, Deaktivieren und Umschalten zwischen den unterschiedlichen Informationen kann der Beifahrer auswählen, ob er in den Unterbrechungen seiner Medienpräsentation einen dunklen Bildschirm oder das Navigationsdisplay angeboten bekommen möchte. Darüber hinaus kann die Anzeigesteuerung auch aus dem automatischen Vorgang herausgenommen und vom Fahrer oder Beifahrer manuell situationsadäquat konfiguriert werden. Beispielsweise kann das Dual-View-Display permanent die Navigationsinformation darstellen, wenn kein Beifahrer an Bord ist. Bei langer Autobahnfahrt mit Beifahrer kann der Navigationsmodus zeitweise abgeschaltet werden, um ungewollte Unterbrechungen der Filmpräsentation zu verhindern. Im automatisch gesteuerten Umschalten des dargestellten Bildinhalts kann darüber hinaus bereits enthalten sein, dass dauerhaft die fahrtrelevanten Informationen angezeigt werden, wenn die aktuelle Blickrichtung des Fahrers nicht ermittelt werden kann. Dies kann beispielsweise dann der Fall sein, wenn die natürliche Beleuchtung des Fahrers nicht für eine Bilderfassung ausreicht (Dämmerung, Tunneldurchfahrt) oder extrem schwankt (Fahrt durch eine Baumallee mit seitlich einfallendem Sonnenlicht). Der Beifahrer muss dann eine vorübergehende Unterbrechung seiner Medienpräsentation in Kauf nehmen. Besondere Kundenwünsche bezüglich des Schaltverhaltens bei extremen Lichtverhältnissen können in der Software berücksichtigt werden. Auch bei ungünstigen Lichtverhältnissen und insbesondere natürlich bei Nachtfahrten kann jedoch ein sicherer Betrieb des Navigationsdisplays gewährleistet werden, wenn der Fahrer aktiv, insbesondere mit Infrarotlicht, beleuchtet wird. Dafür kann in ummittelbarer Nähe des Displays eine auf den Fahrer ausgerichtete Beleuchtungseinrichtung, insbesondere mit Infrarotlichtquellen, angeordnet sein. Insbesondere kann vorgesehen sein, dass die zumindest eine Videokamera und die auf den Fahrer ausgerichtete Beleuchtungseinrichtung hinter einer infrarotlichtdurchlässigen Scheibe, insbesondere im Displaybereich, angeordnet sind. Es kann somit kommerziell ein Komplettsystem zur Verfügung gestellt werden, bei dem im Displayrand die Videokamera und die Infrarotbeleuchtung bereits integriert sind. Damit entfallen Einzelinstallationen und störende Verkabelungen.

Neben der Integration eines richtungsselektiven Beleuchtungssystems zur Erhöhung der Verkehrssicherheit durch verringerte Ablenkung des Fahrers kann im Verfahren nach der Erfindung auch vorgesehen sein, dass die Dauer des mit dem Dual-View-Display vom Fahrer hergestellten Blickkontaktes detektiert und oberhalb eines vorgegebenen Schwellwertes ein Warnsignal von einer akustischen und/oder optischen Warneinrichtung abgegeben wird. Aus Untersuchungen ist bekannt, dass ein Autofahrer maximal für eine Zeitdauer von einer Sekunde auf das Navigationsdisplay oder andere Instrumente schauen darf. Bei längerem Blick auf die Anzeigen steigt das Unfallrisiko jedoch signifikant an. Die genannte Ausführungsform der Erfindung senkt dagegen das Unfallrisiko im Vergleich zu heutigen permanent eingeschalteten Navigationsdisplays erheblich, weil der Fahrer nach Ablauf einer Sekunde akustisch oder optisch (beispielsweise durch ein blinkendes Display) aufgefordert wird, wieder in Fahrtrichtung zu schauen. Diese Maßnahme kann auch im Rahmen eines Fahrerassistenzsystems dazu verwendet werden, den Fahrer durch Sprachausgabe aufzufordern, nach vorne zu schauen, wenn er seinen Blick zu lange auf das Navigationsdisplay richtet.

Für die Software für das Verfahren nach der Erfindung mit einer videobasierten Erkennung der Blickzuwendung in Richtung auf das Dual-View-Display kommen pixelbasierte Verfahren (Vergleich von Bildmustern und Kantenmustern) und merkmalsbasierte Verfahren (Finden und Auswerten der Position der Augenwinkel, Nasenlöcher, Mundwinkel etc. bzw. der Pupille und ggf. zusätzlicher Lichtreflexe auf der Cornea) in Frage. Das angewendete Detektionsverfahren wird dabei so ausgewählt, dass es möglichst robust ist gegenüber Veränderungen der Umgebungsbeleuchtung (Fahrt bei Sonnenschein oder bei Nacht). Zur Einhaltung der Echtzeitbedingung umfasst der verwendete Algorithmus möglichst wenige Rechenoperationen, sodass eine Implementierung auf einer Mikroprozessorplattform möglich ist. Diesem Erfordernis kommt auch das binäre Entscheidungsschema für den Umschaltautomatismus entgegen. Um auch bei Nachtfahrten einsetzbar zu sein, ist, wie bereits erwähnt, eine aktive Beleuchtung des Fahrers mit Infrarot-LEDs erforderlich. Die Auswertung basiert dann zwangsläufig nur auf der Verwendung von Intensitätsbildern ohne natürliche Farbinformationen.

Zur Verdeutlichung der weiteren Softwarewahl und der Erfindung wird anhand von Figuren im speziellen Beschreibungsteil an Ausführungsbeispielen der Betriebsablauf des Verfahrens nach der Erfindung im automatisierten Modus beschrieben. Dabei zeigt die :

**Figur 1**    eine in einem Auto installierte Informationseinheit zur Durchführung des Verfahrens nach der Erfindung,
**Figur 2**    ein Blockdiagramm des Grundprinzips des Verfahrens nach der Erfindung,
**Figur 3**    ein Blockdiagramm des Verfahrens nach der Erfindung mit zusätzlicher Kamera,
**Figur 4**    Kantenbilder als Referenz- und Aktuellbilder,
**Figur 5**    Beispiele für Bewegungsvektoren,
**Figur 6**    die Messung bei der vereinfachten Cornea-Reflex-Methode und
**Figur 7**    die Berechnung des Toleranzwertes für die vereinfachte Cornea-Reflex-Methode

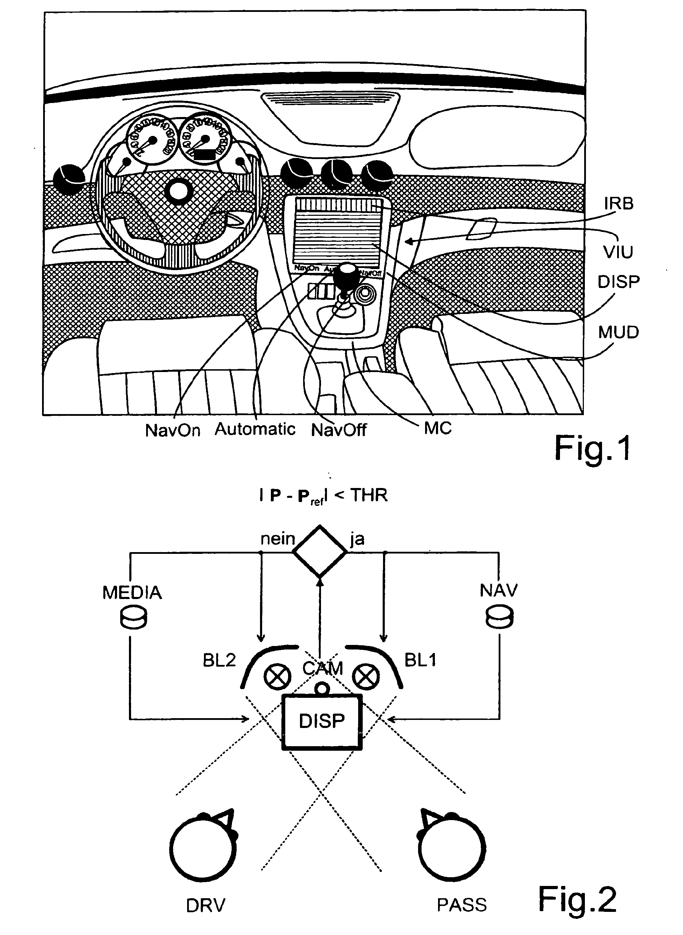

Die **Figur 1** zeigt in einer Fotomontage die Anordnung einer blickgesteuerten Informationseinheit **VIU** nach der Erfindung mit einem Dual-View-Display **DISP** in der Mittelkonsole **MC** eines Autos. Über dem Dual-View-Display **DISP** sind Infrarot-LEDs und eine Videokamera hinter einer infrarotlichtdurchlässigen Blende **IRB** angeordnet. Diverse Schalter einer manuellen Bedienvorrichtung **MUD** ermöglichen eine Auswahl verschiedener Betriebsmodi, beispielsweise "Navigation dauerhaft an" **NavOn**, "automatischer Umschaltbetrieb" **Automatik** und "Navigation dauerhaft aus" **NavOff).** Diese Schalter können als einfache mechanische Taster oder auch als frei konfigurierbare Touchscreen-Elemente in das Display integriert sein. Weitere Funktionselemente sind hinter dem Dual-View-Display **DISP** angeordnet und auf dem Bild nicht sichtbar.

Im Folgenden werden Initialisierung und Betrieb der Blicksteuerung als essenzielle Grundprinzipien des Verfahrens nach der Erfindung beschrieben. Beim natürlichen Sehen werden kleinere Änderungen der Blickrichtung durch eine entsprechende Drehung des Augapfels in Bezug auf den Kopf bewirkt.

Bei größeren Blickbewegungen oder bei einer längeren Fixationsdauer findet zusätzlich eine Drehung des gesamten Kopfes in Richtung auf das fixierte Objekt statt. Die bekannten Verfahren zur Blickmessung haben das Ziel, die Ausrichtung der Sehachse, d.h. den aktuellen Drehwinkel des Augapfels mit Bezug auf ein externes Referenzobjekt, in einem möglichst großen Blickwinkelbereich stabil zu messen (Cornea-Reflex-Methode, vergleiche DE 199 53 835 C1 und die dort zitierten Druckschriften) oder minimale Blickbewegungen relativ zur Ausrichtung des Kopfes zu erfassen (Limbus-Tracking-Methode, vergleiche DE 199 53 835 C1 und die dort zitierten Druckschriften). Bei dem hier beschriebenen Verfahren nach der Erfindung geht es im Unterschied zu den bekannten Blickmessverfahren darum, eine Ja/Nein-Entscheidung in Bezug auf die Fixation eines ausgewählten Objekts (das Display) mit möglichst geringem Aufwand und geringer Störanfälligkeit zu treffen. Deshalb kann die bevorzugte Ausführungsform des implementierten Detektionsverfahrens auf der Auswertung einer Summe von äußerlich sichtbaren und über eine Kamera zu erfassenden Bildmerkmalen beruhen, die auf eine Blickzuwendung schließen lassen. Das Grundprinzip hierzu stellt der Referenzbildvergleich dar (vergleiche Figur 2). Vor Beginn der Fahrt schaltet der Fahrer das Dual-View-Display mit einem Druckschalter in unmittelbarer Nähe des Displays ein. In diesem Augenblick nimmt die in unmittelbarer Nähe des Monitors angebrachte Kamera ein Bild des Fahrers auf, das als Referenzbild für die zu detektierende Blickzuwendung gespeichert wird. Während der Fahrt wird das Referenzbild mit den aktuellen Videobildern verglichen, um eine Blickzuwendung in Richtung auf das Dual-View-Display zu erkennen.

Beim Bildvergleich wird ein Ähnlichkeitswert ermittelt. Dieser Wert kann durch einen Intensitätsvergleich der Bildpunkte in einem vordefinierten Bereich (vorzugsweise ein Block von Bildpunkten, der den Bereich der Augen umfasst) berechnet werden. In einem ersten Schritt wird der vordefinierte Bereich durch ein Blockmatching-Verfahren im aktuellen Kamerabild $P$ gesucht (durch Vergleich der Intensitätswerte in Bildblöcken des Referenzbildes $P_{ref}$ und des aktuellen Kamerabildes **P).** Für den "Best Match" (beste Übereinstimmung) werden anschließend die aufsummierten absoluten Differenzen der Intensitätswerte in den korrespondierenden Blöcken des aktuellen Bildes $P$ und des Referenzbildes $P_{ref}$ zu einem Ähnlichkeitswert zusammengefasst. Um das Verfahren möglichst unempfindlich gegen Veränderungen des Umgebungslichtes zu machen, kann es vorteilhaft sein, nicht mit stark beleuchtungsabhängigen Intensitätswerten, sondern mit Bildkonturen zu arbeiten. Dazu werden mit Hilfe von Kantenoperatoren (z.B. dem "Canny Edge"- Detector oder dem "Sobel"- Operator) die signifikanten Konturen im Referenzbild $P_{ref}$ und im aktuellen Videobild $P$ extrahiert. Anschließend wird nach der oben beschriebenen Methode - aber auf Grundlage der Kantenbilder - ein Ähnlichkeitswert für den "Best Match" ermittelt. Wenn der so ermittelte Ähnlichkeitswert eine vordefinierte Ähnlichkeitsschwelle (Schwellwert **THR**) erreicht, wird ein Signal ausgelöst, das die Bildquelle des Displays **DISP** von der Medienquelle **MEDIA** auf die Navigationsanzeige **NAV** umschaltet. Gleichzeitig wird die auf den Fahrer **DRV** ausgerichtete Rückbeleuchtung **BL1** des Displays **DISP** eingeschaltet. Sobald der Fahrer **DRV** den Kopf/Blick wieder vom Dual-View-Display **DISP** abwendet, wird die Rückbeleuchtung **BL1** ausgeschaltet und die Medienquelle **MEDIA** zugeschaltet.

Dieses um eine gerichtete Rückbeleuchtung erweiterte Grundprinzip einer blickgesteuerten Informationseinheit **VIU** mit einem Dual-View-Display **DISP** ist In der **Figur 2** als Blockdiagramm dargestellt. Wenn das Referenzbild $P_{ref}$ und das aktuelle Kamerabild $P$ der Videokamera **CAM** vom Fahrer **DRV** hinreichend übereinstimmen (die Differenz ist kleiner als ein Schwellwert **THR,** ja/nein-Entscheidung), wird auf eine Blickzuwendung geschlossen. In diesem Fall wird die Navigationsanzeige **NAV** auf das Dual-View-Display **DISP** durchgeschaltet und die auf den Fahrer **DRV** ausgerichtete Rückbeleuchtung **BL1** eingeschaltet. Die Rückbeleuchtung **BL2** für den Beifahrer **PASS** und die Medienquelle **MEDIA** werden vorübergehend ausgeschaltet

Die im folgenden beschriebenen Verfahren dienen dazu, die Blickzuwendung des Fahrers auf das Dual-View-Display möglichst zuverlässig von Blickzuwendungen auf Objekte der Fahrumgebung (beim Blick durch die Windschutzscheibe) bzw. im Auto (beim Blick auf den Rückspiegel und die restlichen Instrumente) zu unterscheiden. Besonders kritisch sind solche Blickzuwendungen, die eine vergleichbare seitliche Drehung des Kopfes und der Augen erfordern wie der Blick auf das Dual-View-Display (gleiche azimutale Ausrichtung).

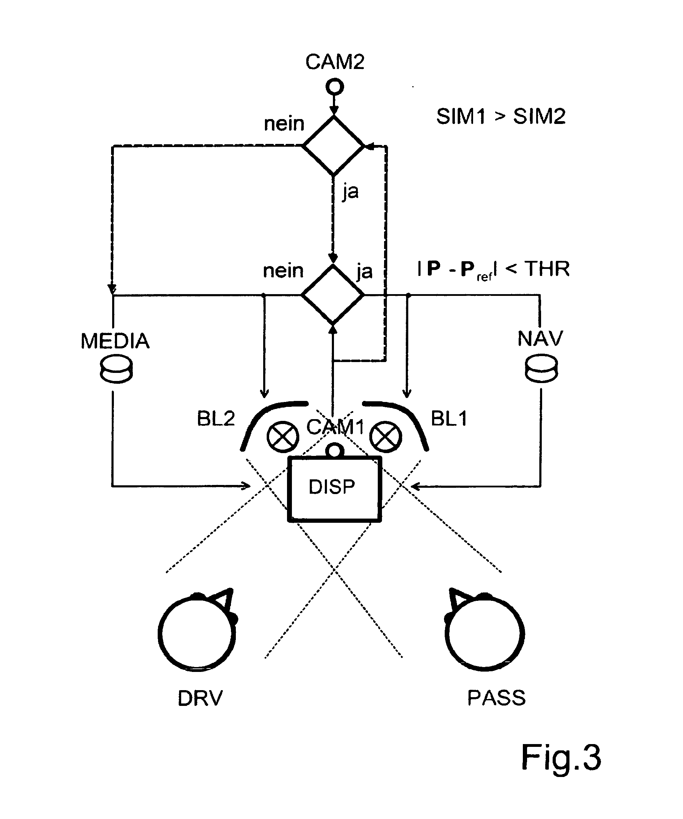

Das erste modifizierte Verfahren umfasst eine Gegenprobe mit einer zusätzlichen Kamera. Eine zusätzliche Videokamera **CAM2** (vergleiche **Figur 3)** wird vorzugsweise unterhalb des inneren Rückspiegels in gleicher azimutaler Lage (bezogen auf den Kopf des Fahrers) wie die Videokamera **CAM1** des Dual-View-Displays **DISP** angebracht. Bei der initialen Kalibrierung des Systems wird ein Referenzbild $P_{ref1}$ beim Blick in die Richtung von Videokamera **CAM1** sowie ein Referenzbild $P_{ref2}$ beim Blick in die Richtung von Videokamera **CAM2** aufgenommen. Während des Betriebs werden zwei Ähnlichkeitswerte **SIM1** und **SIM2** durch Vergleich der aktuellen Kamerabilder **P1/P2** mit den zugehörigen Referenzbildern $P_{ref1}/P_{ref2}$ ermittelt. Die Berechnung erfolgt für beide Signalquellen nach einem der oben beschriebenen Verfahren. Auf eine Blickzuwendung zum Dual-View-Display **DISP** wird nur dann geschlossen, wenn Videokamera **CAM1** einen besseren Ähnlichkeitswert **SIM1** liefert als Videokamera **CAM2 (SIM1 > SIM2)** und dieser Ähnlichkeitswert zudem den vordefinierten Schwellwert für die Ähnlichkeit **THR** erreicht.

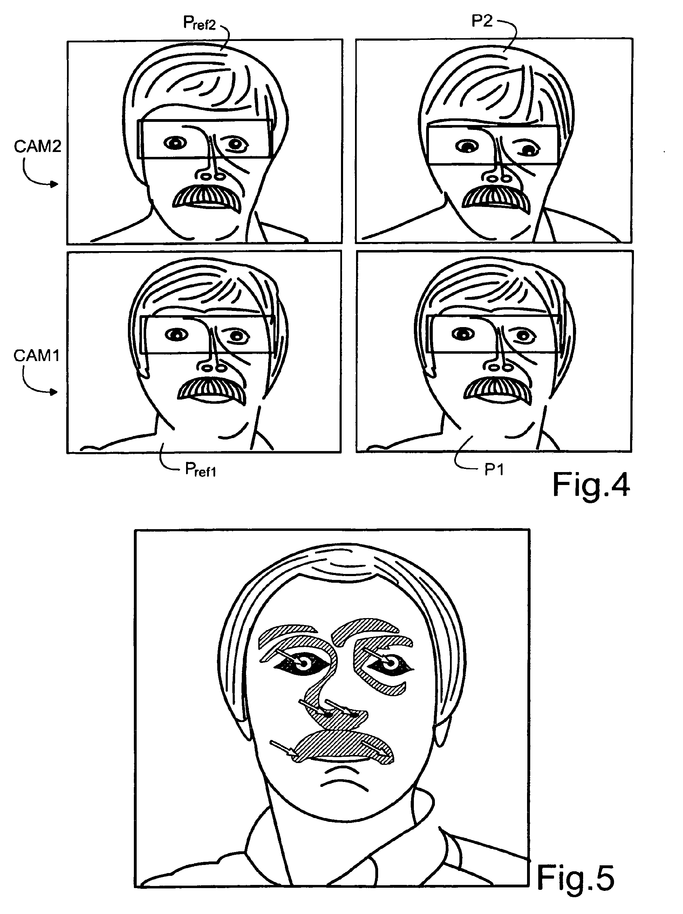

Die **Figur 4** zeigt die Kantenbilder der oberen, im Rückspiegelbereich angeordneten Kamera **CAM2** und der unteren, im Bereich des Dual-View-Displays **DISP** angeordneten Kamera **CAM1** (jeweils links das Referenzbild $P_{ref1}/P_{ref2}$ und rechts das aktuelle Bild **P1/P2**) für den Fall, dass der Fahrer **DRV** auf das Dual-View-Display **DISP** schaut, das heißt, in Richtung auf Videokamera **CAM1.** Die eingezeichneten Rechtecke markieren die für die Berechnung der Ähnlichkeitswerte **SIM1** und **SIM2** verwendeten Blockgrenzen im Augenbereich. Es ist zu erkennen, dass die oberen Blöcke deutlich von einander abweichen und die unteren Blöcke einander sehr ähnlich sind. In diesem Fall signalisiert das Verfahren nach der Erfindung eine Blickzuwendung zum Dual-View-Display **DISP** und steuert die entsprechenden Umschaltungen an.

Eine andere Methode zur Verbesserung der Detektionssicherheit stellt die Auswertung von Bewegungsvektoren ("Visual Flow") dar (vergleiche **Figur 5**). Die bisher dargestellten Methoden werten statische Bildmerkmale für die Detektion einer möglichen Blickzuwendung aus. Die Zuverlässigkeit des Verfahrens nach der Erfindung kann jedoch durch Berücksichtigung des natürlichen Bewegungsablaufs im Zuge der Blickzuwendung noch verbessert werden (dynamische Blickzuwendungsgeste durch Drehung des Kopfes und der Augen, Bewegung der Augenlider). Zu diesem Zweck werden zeitlich aufeinander folgende Bilder der einen oder beider Videokameras mit Methoden der Bewegungsvektorschätzung (Visual Flow) analysiert. Solche Methoden sind z.B. im Zusammenhang mit der digitalen Bilddatenkompression (z.B. der bewegungskompensierten Prädiktion bei der Datenkompression nach MPEG-2) und der digitalen Formatkonversion (bewegungsadaptive örtliche / zeitliche Bildinterpolation) bekannt. Es gibt bereits echtzeitfähige Hardwarelösungen für die Bewegungsschätzungen - zumeist auf der Grundlage eines Blockmatchingverfahrens. Bei als bekannt vorausgesetzter Aufnahmegeometrie (Position der Videokameras, des Dual-View-Displays und des Fahrers) und der Annahme, dass der Fahrer die überwiegende Zeit nach vorne schaut, kann allein aus der Richtung der Bewegungsvektoren auf eine mögliche Blickzuwendung geschlossen werden. In Verbindung mit der Auswertung statischer Bildmerkmale kann das Ergebnis der Bewegungsvektorschätzung im Rahmen einer Konsistenzprüfung zur Verbesserung der Zuverlässigkeit der Blickzuwendungsdetektion verwendet werden. Die Bewegungsvektoren weisen in der Tendenz nach unten (negativer Mittelwert der vertikalen Komponente der Vektoren), wenn eine Blickzuwendung in Richtung auf das in der Mittelkonsole angebrachte Dual-View-Display stattfindet.

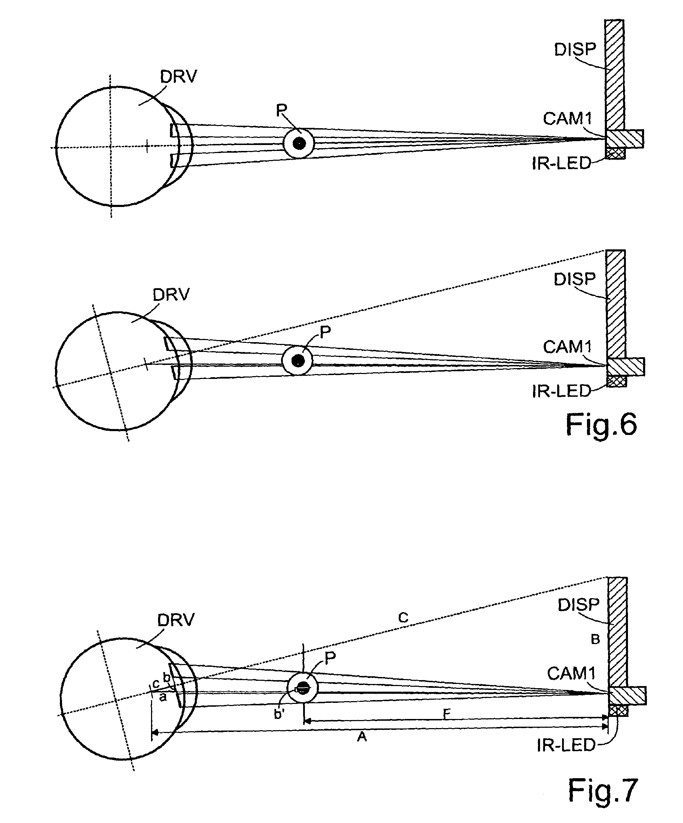

Weitere Detektionsverfahren basieren auf der direkten Blickmessung. Mit den bislang beschriebenen Methoden sind Blickzuwendungen durch Augenbewegungen ohne eine nennenswerte Kopfdrehung schwer zu detektieren. Derartige Blickzuwendungen sind insbesondere dann zu erwarten, wenn das Dual-View-Display nicht in der Mittelkonsole, sondern höher angebracht wird (im oder auf dem Hauptinstrumentenbrett). Für diesen Fall soll eine vereinfachte Form der bekannten Cornea-Reflex-Methode (vergleiche DE 199 53 835 C1 und die dort zitierten Druckschriften) eingesetzt werden. Die vereinfachte Form sieht vor, dass die zur Erzeugung des Lichtreflexes erforderlichen Leuchtdioden in der unmittelbaren Nähe der Kameraachse angeordnet sind. Auf diese Weise erscheint die Pupille als heller Fleck im Kamerabild (vergleichbar mit dem Rotaugen-Effekt beim Fotografieren mit einem Blitzlichtgerät); zudem liegt der Lichtreflex beim Blick in die Kamera im Zentrum des Pupillenbildes und lässt sich dort durch eine Intensitäts-Schwellwertoperation lokalisieren (vergleiche Figur 6).

In der in Figur 6 skizzierten Ausführungsform befindet sich das Dual-View-Display **DISP** unmittelbar über der blickmessenden Videokamera **CAM1**. Infrarot-Leuchtdioden **IR-LED** sind direkt unterhalb der Videokamera **CAM1** angeordnet. In der oberen Darstellung in Figur 6 blickt der Fahrer DRV direkt in die Kamera bzw. auf das Dual-View-Display **DISP**. Das Kamerabild **P** des Auges **EYE** des Fahrers **DRV** zeigt einen zentralen Reflexpunkt auf der Hornhaut des Auges mit Iris und Pupille. In der unteren Darstellung in **Figur 6** blickt der Fahrer seitlich am Dual-View-Display **DISP** vorbei. Deutlich ist im entsprechenden Kamerabild **P** der dezentrale Reflexpunkt auf der Hornhaut zu erkennen.

Zur Detektion einer Blickzuwendendung zum Dual-View-Display **DISP** kann somit ein größtenteils aufnahmegeometrisch bestimmter Toleranzbereich angegeben werden, in dem sich der Lichtreflex bezogen auf das Zentrum der Pupille befinden muss, wenn der Fahrer auf das Dual-View-Display schaut. In der **Figur 7** ist die Berechnung eines Toleranzwertes **b'** für eine gegebene Aufnahmegeometrie unter Annahme der allgemein bekannten Gullstrandschen Werte für das schematische Durchschnittsauge dargestellt. Im Unterschied zur bekannten Cornea-Reflex-Methode ist für die hier beschriebene Anwendung also keine individuelle Kalibrierung des Messverfahrens erforderlich; stattdessen wird vom Gullstrandschen Durchschnittsauge und einfach messbaren Größen des technischen Aufbaus ausgegangen, was das Detektionsverfahren bedeutend vereinfacht. Weiterhin wird vereinfachend angenommen, dass sich das Auge **EYE** um den Krümmungsmittelpunkt der Hornhaut (Cornea) dreht. Der gesuchte Toleranzwert b' berechnet sich dann nach dem Strahlensatz zu :

$$b' = c \cdot B/C \cdot F/A.$$

Dabei bedeuten :

**A =**   Abstand der messenden Videokamera (Hauptebene) vom Auge des Fahrers (z.B. 70 cm)
**B** =   Abstand des Displayrandes von der optischen Achse der Videokamera
**C** =   Abstand des Displayrandes vom Auge des Fahrers ($\cong$ A)
**c** =   Abstand der Pupillenebene vom Krümmungsmittelpunkt der Cornea (4,1 mm, nach Gullstrand)
**F** =   Abstand der (fiktiven) Bildebene der Videokamera vom Linsenzentrum ($\cong$ Brennweite, z. B. 4 mm) und
**b'** =   Abstand des Lichtreflexes vom Zentrum der Pupille im Kamerabild.

**Bezugszeichenliste**

**A**       Abstand CAM / EYE
**b'**      Toleranzwert
**B**       Abstand Rand DISP / CAM
**BL1**     Rückbeleuchtung DRV
**BL2**     Rückbeleuchtung PASS
**c**       Abstand Pupillenebene / Krümmungsmittelpunkt der Cornea
**C**       Abstand Rand DISP / EYE
**CAM**     Videokamera

| DISP | Dual-View-Display |
|---|---|
| DRV | Fahrer |
| EYE | Auge des Fahrers |
| F | Abstand der Bildebene CAM / Linsenzentrum |
| IRB | infrarotlichtdurchlässige Blende |
| IR-LED | Infrarot-Leuchtdiode |
| MEDIA | Medienquelle |
| MC | Mittelkonsole |
| MUD | manuelle Bedienvorrichtung |
| NAV | Navigationsanzeige |
| P | aktuelles Kamerabild |
| Pref | Referenzbild |
| PASS | Beifahrer |
| SIM | Ähnlichkeitswert |
| THR | Schwellwert für Ähnlichkeitswert SIM |
| VIU | blickgesteuerte Informationseinheit |

**Patentansprüche**

1. Verfahren zur Anzeigesteuerung von unterschiedlichen Informationen auf einem gemeinsamen Dual-View-Display (DISP) durch den Fahrer während der Fahrt in einem Fahrzeug, wobei auch ein möglicher Beifahrer (PASS) das Dual-View-Display (DVR) betrachten kann,
   **dadurch gekennzeichnet, dass**
   automatisch die aktuelle Blickrichtung des Fahrers (DRV) fortlaufend detektiert wird und die für den Fahrer fahrtrelevanten Informationen (NAV) nur dann nahezu verzögerungsfrei angezeigt werden, wenn der Fahrer (DRV) Blickkontakt mit dem Dual-View-Display (DISP) hat, wohingegen in den Intervallen ohne Blickkontakt alternativ fahrtunrelevante Informationen (MEDIA) angezeigt werden können, wobei die aktuelle Blickrichtung durch eine videobasierte Detektion der Kopfdrehung und/oder Augenbewegung des Fahrers (DRV) auf der Basis eines statischen oder dynamischen Detektionsverfahrens ermittelt und in der Auswertung nur eine binäre Entscheidung (THR) getroffen wird, ob der Fahrer (DRV) das Dual-View-Display (DISP) aktuell anblickt oder nicht.

2. Verfahren nach Anspruch 1,
   **dadurch gekennzeichnet, dass**
   die Informationen richtungsselektiv angezeigt werden, wobei die fahrtrelevanten Informationen (NAV) nur dem Fahrer (DRV) und die fahrtunrelevanten Informationen (MEDIA) nur dem Beifahrer (PASS) angezeigt werden.

3. Verfahren nach Anspruch 1 oder 2,
   **dadurch gekennzeichnet, dass**
   dauerhaft die fahrtrelevanten Informationen (NAV) angezeigt werden, wenn die aktuelle Blickrichtung des Fahrers (DRV) nicht ermittelt werden kann.

4. Verfahren nach einem der Ansprüche 1 bis 3,
   **dadurch gekennzeichnet, dass**
   das verwendete Detektionsverfahren pixel- oder merkmalsbasiert arbeitet.

5. Verfahren nach einem der Ansprüche 1 bis 4,
   **dadurch gekennzeichnet, dass**
   als statisches Detektionsverfahren die Cornea-Reflex-Methode zur stabilen Messung eines möglichst großen Blickwinkelbereichs oder die Limbus-Tracking-Methode zur Erfassung einer minimalen relativen Blickbewegung verwendet wird.

6. Verfahren nach Anspruch 5,
   **dadurch gekennzeichnet, dass**
   eine vereinfachte Cornea-Reflex-Methode, bei der die Pupille als heller Fleck detektiert und ein entsprechender Toleranzbereich für die Lage des Lichtreflexes auf der Hornhaut definiert wird, verwendet wird.

7. Verfahren nach einem der Ansprüche 1 bis 6,

**dadurch gekennzeichnet, dass**
ein differenzbildender Ähnlichkeitsvergleich zwischen einem Referenzbild ($P_{ref}$), bei dem der Fahrer (DRV) das Dual-View-Display (DISP) anblickt, und einem aktuellen Bild (P) durchgeführt und ein Ähnlichkeitswert (SIM) ermittelt wird, wobei die binäre Entscheidung in Abhängigkeit von einem vorgegebenen Schwellwert (THR) für den ermittelten Ähnlichkeitswert durchgeführt wird.

8. Verfahren nach Anspruch 7,
**dadurch gekennzeichnet, dass**
der Ähnlichkeitswert (SIM) in einem vordefinierten Bereich unter Anwendung eines Blockmatching-Verfahrens oder mit Intensitätswerten oder Kantenoperatoren ermittelt wird.

9. Verfahren nach Anspruch 1 bis 8,
**dadurch gekennzeichnet, dass**
das dynamische Detektionsverfahren auf der Auswertung von Bewegungsvektoren, insbesondere unter Anwendung eines Blockmatching-Verfahrens, beruht.

10. Verfahren nach einem der Ansprüche 1 bis 9,
**dadurch gekennzeichnet, dass**
die Anzeigesteuerung auch manuell vorgenommen werden kann.

11. Verfahren nach einem der Ansprüche 1 bis 10,
**dadurch gekennzeichnet, dass**
die Dauer des mit dem Dual-View-Display (DISP) vom Fahrer (DRV) hergestellten Blickkontaktes detektiert und oberhalb eines vorgegebenen Schwellwertes ein Warnsignal, eine Warnmeldung oder eine Aufforderung an den Fahrer abgegeben wird.

12. Verfahren nach einem der Ansprüche 1 bis 11,
**dadurch gekennzeichnet, dass**
der Fahrer (DRV) aktiv, insbesondere mit Infrarotlicht (IR-LED), beleuchtet wird.

13. Verfahren nach Anspruch 1 bis 12,
**dadurch gekennzeichnet, dass**
die videobasierte Detektion auf Videoaufnahmen an zwei unterschiedlichen Aufnahmeorten basiert, wobei der eine Aufnahmeort der Position des Dual-View-Displays (DISP) entspricht und der andere Ort azimutal darüber ausgerichtet ist und von beiden Aufnahmeorten aus Referenzbilder ($P_{ref}$) erstellt werden.

14. Optoakustische Informationseinheit für ein Fahrzeug zur Anzeige unterschiedlicher Informationen auf einem gemeinsamen Dual-View-Display mit einer Programmeinheit und einer Anzeigesteuereinheit zur Anzeigesteuerung von unterschiedlichen Informationen auf dem fest in das Fahrzeug integrierbaren Dual-View-Display durch den Fahrer während der Fahrt in einem Fahrzeug,
wobei auch ein möglicher Beifahrer das Dual-View-Display betrachten kann,
wobei eine videobasierte Detektionseinheit zur fortlaufenden, automatischen Ermittlung der aktuellen Blickrichtung des Fahrers (DRV) mit zumindest einer in unmittelbarer Nähe des Dual-View-Displays (DISP) angeordneten Videokamera (CAM) und eine auf die Anzeigesteuereinheit führende Auswerteeinheit vorgesehen sind,
wobei es möglich ist, dass abhängig von der Blickrichtung des Fahrers (DRV) Informationen nur für den Beifahrer (PASS) sichtbar gemacht werden können,
wobei das Dual-View-Display so ausgebildet ist, dass es nicht möglich ist, dem Fahrer und dem Beifahrer gleichzeitig unterschiedliche, sich jeweils vom Informationsgehalt eines ausgeschalteten Bildschirms unterscheidende, Informationen bereitzustellen.

15. Optoakustische Informationseinheit nach Anspruch 14,
**dadurch gekennzeichnet, dass**
das Dual-View-Display (DISP) in die Mittelkonsole (MC) des Fahrzeugs integrierbar ist.

16. Optoakustische Informationseinheit nach Anspruch 14 oder 15,
**dadurch gekennzeichnet, dass**
das Dual-View-Display (DISP) als Flachdisplay, insbesondere mit Querformat, ausgebildet ist.

**17.** Optoakustische Informationseinheit nach einem der Ansprüche 14 bis 16,
**dadurch gekennzeichnet, dass**
in das Dual-View-Display (DISP) ein umschaltbares, der Darstellung der unterschiedlichen Informationen dienendes Rückbeleuchtungssystem (BL1, BL2) mit zwei alternativen Beleuchtungsrichtungen, von denen die eine zum Fahrer (DRV) und die andere zum Beifahrer (PASS) verläuft, integriert ist.

**18.** Optoakustische Informationseinheit nach einem der Ansprüche 14 bis 17,
**dadurch gekennzeichnet, dass**
eine manuelle Bedieneinrichtung (MUD) zum wahlweisen Aktivieren, Deaktivieren und Umschalten zwischen den unterschiedlichen Informationen vorgesehen ist.

**19.** Optoakustische Informationseinheit nach einem der Ansprüche 14 bis 18,
**dadurch gekennzeichnet, dass**
eine akustische und/oder optische Warneinrichtung vorgesehen ist.

**20.** Optoakustische Informationseinheit nach einem der Ansprüche 14 bis 19,
**dadurch gekennzeichnet, dass**
in ummittelbarer Nähe des Dual-View-Displays (DISP) und/oder der Videokamera (CAM) eine auf den Fahrer (DRV) ausgerichtete Beleuchtungseinrichtung (BL1), insbesondere mit Infrarotlichtquellen (IR-LED), angeordnet ist.

**21.** Optoakustische Informationseinheit nach einem der Ansprüche 14 bis 20,
**dadurch gekennzeichnet, dass**
die zumindest eine Videokamera (CAM) und die auf den Fahrer (DRV) ausgerichtete Beleuchtungseinrichtung (BL1) hinter einer infrarotlichtdurchlässigen Blende (IRB), insbesondere im Displaybereich, angeordnet sind.

**22.** Optoakustische Informationseinheit nach einem der Ansprüche 14 bis 21,
**dadurch gekennzeichnet, dass**
azimutal zu der zumindest einen Videokamera (CAM1) eine zweite Videokamera (CAM2) vorgesehen ist.

**23.** Optoakustische Informationseinheit nach einem der Ansprüche 14 bis 22,
**dadurch gekennzeichnet, dass**
die zweite Videokamera (CAM2) im Bereich des Rückspiegels eines Autos als Fahrzeug vorgesehen ist.

**Claims**

**1.** Method for controlling the display of different information on a common dual-view display (DISP) through the driver while travelling in a vehicle, wherein a possible passenger (PASS) can also view the dual-view display (DISP),
**characterised in that**
the actual viewing direction of the driver (DRV) is continuously detected automatically and the information (NAV) which is travel-relevant for the driver is only displayed almost instantaneously when the driver (DRV) has eye contact with the dual-visual display (DISP), whereas travel-irrelevant information (MEDIA) can alternatively be displayed in the intervals without eye contact, wherein the actual viewing direction is established through a video-based detection of the turn of the head and/or eye movement of the driver (DRV) on the basis of a static or dynamic detection method, and only a binary decision (THR) is made in the evaluation as to whether or not the driver (DRV) is actually looking at the dual-view display (DISP).

**2.** Method according to Claim 1,
**characterised in that**
the information is displayed in a directionally selective manner, wherein the travel-relevant information (NAV) is only displayed to the driver (DRV) and the travel-irrelevant information (MEDIA) is only displayed to the passenger (PASS).

**3.** Method according to Claim 1 or 2,
**characterised in that**
the travel-relevant information (NAV) is permanently displayed when the actual viewing direction of the driver (DRV) cannot be established.

**4.** Method according to any one of Claims 1 to 3,

**characterised in that**
the detection method which is used works on a pixel or feature basis.

5. Method according to any one of Claims 1 to 4,
   **characterised in that**
   the static detection method which is used is the corneal reflex method for a stable measurement of the largest possible viewing angle range or the limbus tracking method for detecting a minimal relative viewing movement.

6. Method according to Claim 5,
   **characterised in that**
   a simplified corneal reflex method, in which the pupil is detected as a bright spot and a corresponding tolerance range for the position of the light reflex on the cornea is defined, is used.

7. Method according to any one of Claims 1 to 6,
   **characterised in that**
   a difference-forming similarity comparison between a reference image ($P_{ref}$), in which the driver (DRV) looks at the dual-view display (DISP), and an actual image (P) is carried out and a similarity value (SIM) is established, wherein the binary decision is made in accordance with a predetermined threshold value (THR) for the established similarity value.

8. Method according to Claim 7,
   **characterised in that**
   the similarity value (SIM) is established in a predefined range using a block matching method or with intensity values or edge operators.

9. Method according to Claims 1 to 8,
   **characterised in that**
   the dynamic detection method is based on the evaluation of movement vectors, in particular using a block matching method.

10. Method according to any one of Claims 1 to 9,
    **characterised in that**
    the display control can also be carried out manually.

11. Method according to any one of Claims 1 to 10,
    **characterised in that**
    the duration of the eye contact established by the driver (DRV) with the dual-view display (DISP) is detected and a warning signal, a warning message or a prompt is delivered to the driver above a predetermined threshold value.

12. Method according to any one of Claims 1 to 11,
    **characterised in that**
    the driver (DRV) is actively illuminated, in particular with infrared light (IR LED).

13. Method according to Claims 1 to 12,
    **characterised in that**
    the video-based detection is based on video recordings at two different recording locations, wherein one recording location corresponds to the position of the dual-view display (DISP) and the other location is oriented azimuthally thereabove, and reference images ($P_{ref}$) are created from both recording locations.

14. Optoacoustic information unit for a vehicle for displaying different information on a common dual-view display with a program unit and a display control unit for controlling the display of different information on the dual-view display, which can be permanently integrated into the vehicle, through the driver while travelling in a vehicle, wherein a possible passenger can also view the dual-view display, wherein a video-based detection unit for the continuous, automatic establishment of the actual viewing direction of the driver (DRV) with at least one video camera (CAM) disposed in the immediate vicinity of the dual-view display (DISP) and an evaluation unit leading to the display control unit are provided, wherein it is possible that, depending on the viewing direction of the driver (DRV), information may only be shown to the passenger (PASS),

wherein the dual-view display is formed so that it is not possible to simultaneously provide the driver and the passenger with different information which in each case differs from the information content of a disconnected screen.

15. Optoacoustic information unit according to Claim 14,
    **characterised in that**
    the dual-view display (DISP) can be integrated into the centre console (MC) of the vehicle.

16. Optoacoustic information unit according to Claim 14 or 15,
    **characterised in that**
    the dual-view display (DISP) is formed as a flat display, in particular with a horizontal format.

17. Optoacoustic information unit according to any one of Claims 14 to 16,
    **characterised in that**
    a switchable back illumination system (BL1, BL2) with two alternative illuminating directions, one of which extends to the driver (DRV) and the other of which to the passenger (PASS), serving to represent the different information is integrated into the dual-view display (DISP).

18. Optoacoustic information unit according to any one of Claims 14 to 17,
    **characterised in that**
    a manual operating device (MUD) for optionally activating, deactivating and switching between the different information is provided.

19. Optoacoustic information unit according to any one of Claims 14 to 18,
    **characterised in that**
    an acoustic and/or optical warning device is provided.

20. Optoacoustic information unit according to any one of Claims 14 to 19,
    **characterised in that**
    an illumination device (BL1), in particular with infrared light sources (IR LED), which is oriented at the driver (DRV), is disposed in the immediate vicinity of the dual-view display (DISP) and/or of the video camera (CAM).

21. Optoacoustic information unit according to any one of Claims 14 to 20,
    **characterised in that**
    the at least one video camera (CAM) and the illumination device (BL1), oriented at the driver (DRV), are disposed behind an infrared light-transmitting screen (IRB), in particular in the display area.

22. Optoacoustic information unit according to any one of Claims 14 to 21,
    **characterised in that**
    a second video camera (CAM2) is provided azimuthally relative to the at least one video camera (CAM1).

23. Optoacoustic information unit according to any one of Claims 14 to 22,
    **characterised in that**
    the second video camera (CAM2) is provided in the area of the rear-view mirror of a car as the vehicle.

**Revendications**

1. Procédé pour commander l'affichage de différentes informations sur un afficheur double vision, commun (DISP) par le conducteur au cours d'un déplacement avec le véhicule, selon lequel un éventuel passager (PASS) peut observer l'afficheur à double vision (DISP),
   **caractérisé en ce qu'**
   la direction de visée actuelle du conducteur (DRV) est détectée automatiquement en permanence et les informations (NAV) concernant le déplacement à destination du conducteur ne sont affichées pratiquement sans retard que si le conducteur (DRV) est en contact de visée avec l'afficheur double vision (DISP) alors que dans les intervalles sans contact de visée, des informations alternatives ne concernant pas directement le trajet (MEDIA) peuvent être affichées,
   la direction de visée actuelle étant déterminée par une détection fondée sur un moyen vidéo de la rotation de la tête et/ou du mouvement des yeux du conducteur (DRV) sur la base d'un procédé de détection statique ou dynamique et l'exploitation ne donne qu'une décision binaire (THR) indiquant si le conducteur (DRV) observe ou non actuellement l'afficheur double vision (DISP).

2. Procédé selon la revendication 1,
   **caractérisé en ce que**
   les informations sont affichées de manière sélective selon la direction et les informations concernant le trajet (NAV) ne sont présentées qu'au conducteur (DRV) alors que les informations ne concernant pas le trajet (MEDIA) ne sont affichées que pour le passager (PASS).

3. Procédé selon la revendication 1 ou 2,
   **caractérisé en ce qu'**
   on affiche en permanence les informations concernant le trajet (NAV) si la direction actuelle de visée du conducteur (DRV) n'a pu être déterminée.

4. Procédé selon l'une des revendications 1 à 3,
   **caractérisé en ce qu'**e
   le procédé de détection fonctionne en utilisant des pixels ou des caractéristiques.

5. Procédé selon l'une des revendications 1 à 4,
   **caractérisé en ce que**
   le procédé de détection statique utilise le procédé de réflexion de Cornea pour mesurer de manière stable une plage d'angle de visée relativement importante ou encore le procédé de poursuite de Limbus pour saisir un mouvement de visée minimum relatif.

6. Procédé selon la revendication 5,
   **caractérisé en ce qu'**
   on utilise un procédé de réflexion de Cornea, simplifié, selon lequel la pupille se détecte comme zone claire et une plage de tolérance correspondante est définie pour la position de la lumière réfléchie par la cornée.

7. Procédé selon l'une des revendications 1 à 6,
   **caractérisé en ce qu'**
   on effectue une comparaison d'analogie de différences d'images entre une image de référence ($P_{ref}$) pour laquelle le conducteur (DRV) regarde l'afficheur double vision (DISP) et une image actuelle (P) et prend une valeur d'analogie (SIM), la décision binaire étant faite en fonction d'une valeur de consigne (THR) prédéfinie pour la valeur d'analogie déterminée.

8. Procédé selon la revendication 7,
   **caractérisé en ce que**
   la valeur d'analogie (SIM) se détermine dans une plage prédéfinie en utilisant un procédé de concordance de blocs ou encore avec des valeurs d'intensité ou des opérateurs d'arêtes.

9. Procédé selon les revendications 1 à 8,
   **caractérisé en ce que**
   le procédé de détection dynamique repose sur l'exploitation des vecteurs de mouvements, notamment en utilisant le procédé de concordance ou de blocs.

10. Procédé selon l'une des revendications 1 à 9,
    **caractérisé en ce que**
    la commande d'affichage peut être effectuée manuellement.

11. Procédé selon l'une des revendications 1 à 10,
    **caractérisé en ce que**
    la durée du contact de visée établi entre le conducteur (DRV) et l'afficheur double vision (DISP) est détectée et au dessus d'une valeur de seuil prédéfinie on émet un signal avertisseur, un message d'avertissement ou une demande à destination du conducteur.

12. Procédé selon l'une des revendications 1 à 11,
    **caractérisé en ce que**

le conducteur (DRV) est éclairé de manière active notamment par une lumière infrarouge (IR-LED).

13. Procédé selon l'une des revendications 1 à 12,
**caractérisé en ce que**
la détection en technique vidéo se fonde sur des prises vidéo en deux emplacements de prises de vue différents et l'un des emplacements de prise de vue correspond à la position de l'afficheur double vision (DISP) et l'autre emplacement est aligné au-dessus de celui-ci dans la direction azimutale et à partir des deux emplacements de prise de vue on établit des images de références ($P_{ref}$).

14. Unité d'information opto-acoustique pour un véhicule servant à afficher des informations différentes sur un afficheur double vision, commun, avec une unité de programme et une unité de commande d'affichage pour commander l'affichage de différentes informations sur l'afficheur double vision intégré de manière fixe dans le véhicule par le conducteur au cours d'un trajet avec le véhicule,
selon lequel un éventuel passager peut observer l'afficheur double vision, une unité de détection vidéo est prévue pour déterminer en permanence de façon automatique la direction de visée actuelle du conducteur (DRV) avec au moins une caméra vidéo (CAM) installée au voisinage immédiat de l'afficheur double vision (DISP) et une unité d'exploitation reliée à l'unité de commande d'affichage,
en permettant qu'en fonction de la direction de visée du conducteur (DRV), des informations ne soient rendues visibles que pour le passager (PASS), l'afficheur double vision étant réalisé pour ne pas permettre de fournir au conducteur et aux passagers, simultanément des informations différentes et qui diffèrent respectivement du contenu d'informations d'un écran d'images coupées.

15. Unité d'informations opto-acoustiques selon la revendication 14,
**caractérisée en ce que**
l'afficheur double vision (DISP) est intégré dans la console centrale (MC) du véhicule.

16. Unité d'informations opto-acoustiques selon la revendication 14 ou 15,
**caractérisée en ce que**
l'afficheur double vision (DISP) est un afficheur plat, notamment de format transversal.

17. Unité d'informations opto-acoustiques selon la revendication 14 à 16,
**caractérisée en ce que**
l'afficheur double vision (DISP) intègre un système de rétro-éclairage commuté, servant à représenter différentes informations (BL1, BL2) avec deux directions d'éclairage alternatives, dont l'une est tournée vers le conducteur (DRV) et l'autre vers le passager (PASS).

18. Unité d'informations opto-acoustiques selon la revendication 14 à 17,
**caractérisée par**
une installation de commande manuelle (MUD) pour activer, neutraliser ou commuter sélectivement entre les différentes informations.

19. Unité d'informations opto-acoustiques selon l'une des revendications 14 à 18,
**caractérisée par**
une installation d'avertissement acoustique et/ou optique.

20. Unité d'informations opto-acoustiques selon l'une des revendications 14 à 19,
**caractérisée en ce qu'**
au voisinage immédiat de l'afficheur double vision (DISP) et/ou de la caméra vidé (CAM) il y a une installation d'éclairage (BL1) dirigée vers le conducteur (DRV), notamment une source de lumière infrarouge (IR-LED).

21. Unité d'informations opto-acoustiques selon l'une des revendications 14 à 20,
**caractérisée en ce qu'**
au moins une caméra vidéo (CAM) et l'installation d'éclairage (BL1) dirigée vers le conducteur (DRV) sont prévues derrière un écran (IRB) transparent à la lumière infrarouge, notamment au niveau de l'afficheur.

22. Unité d'informations opto-acoustiques selon l'une des revendications 14 à 21,
**caractérisée par**
une seconde caméra vidéo (CAM2) prévue dans la direction azimutale d'au moins une caméra vidéo (CAM1).

**23.** Unité d'informations opto-acoustiques selon l'une des revendications 14 à 22,
**caractérisée en ce que**
la seconde caméra vidéo (CAM2) est prévue dans la région du rétroviseur du véhicule automobile.

IRB

VIU

DISP

MUD

NavOn  Automatic  NavOff          MC

Fig.1

$| \mathbf{P} - \mathbf{P}_{ref}| < THR$

nein        ja

MEDIA                    NAV

BL2      CAM      BL1

DISP

DRV                PASS        Fig.2

Fig.3

Fig.4

Fig.5

DISP

DRV

P

CAM1

IR-LED

DRV

DISP

P

CAM1

IR-LED

**Fig.6**

DRV

DISP

C

B

P

CAM1

c b
a

b'

A

F

IR-LED

**Fig.7**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19737942 A1
- DE 19920789 A1
- DE 19951001 A1
- DE 19746764 A1
- US 20030007227 A1
- WO 2004016460 A1
- DE 19735177 A1
- DE 19953835 C1